# EUROPEAN PATENT SPECIFICATION

(11) **EP 1 763 964 B1**
(45) Date of publication and mention of the grant of the patent: **06.10.2010**
(21) Application number: 04749122.0
(22) Date of filing: 05.07.2004
(51) Int. Cl.: H04L 29/06, H04W 4/10

(54) **DEVICES AND METHODS FOR PUSH MESSAGE INITIATED SERVICE**
VORRICHTUNG UND VERFAHREN FÜR EINEN DURCH PUSH-NACHRICHTEN INITIIERTEN DIENST
DISPOSITIFS ET PROCEDES PERMETTANT DE FOURNIR UN SERVICE INITIE PAR UN MESSAGE DE POUSSER

(43) Date of publication of application: 21.03.2007
(73) Proprietor: Telefonaktiebolaget LM Ericsson (publ), 164 83 Stockholm (SE)
(72) Inventor: SKOG, Robert, S-165 76 Hässelby (SE)
(74) Representative: Norin, Klas
(86) International application number: PCT/SE2004/001086
(87) International publication number: WO 2006/004466

(56) References cited:
- WO-A1-01/33782
- GB-A- 2 361 603
- US-A1- 2003 040 280
- US-B1- 6 584 321

## Description

### FIELD OF THE INVENTION

The present invention relates to equipment and methods in mobile communication systems, and more particularly, to controlling quality of service requests for transmissions relating to a packet data service.

### BACKGROUND

Communication network for packet based communication of information in the form of data bits are well known to the person skilled in the art. The growing importance of mobile communication creates the demand to transfer data over wireless connections. Wireless Application Protocol (WAP) defines a set of protocols to enable operators and manufacturers to provide applications that operate over wireless communication networks. One example of a service that is possible to provide via the WAP architecture is WAP Push, which is a service to push content to mobile devices.

The "push" technology implies that a server in a client/server model transmits information to a client without any explicit request from the client. This differs from "pull" technology which is typically used e.g. for browsing the World Wide Web, where the client requests a service or information from the server, which then responds by transmitting information to the client. In other words "pull" transactions of information are initiated from the client, whereas "push" transactions are server-initiated.

In a WAP Push operation a Push Initiator (PI) transmits a push content and delivery instructions to a Push Proxy Gateway (PPG), which then delivers the push content to a WAP client, such as a mobile phone or some other kind of terminal with WAP capabilities, according to the delivery instructions.

The PI may be an application that runs on an ordinary web server. The PI communicates with the PPG using the Push Access Protocol (PAP), while the PPG uses the Push Over-The-Air (OTA) Protocol to deliver the push content to the client. More information about the WAP Push framework can be found in the document "WAP Push Architectural Overview, Version 03-Jul-2001", published on the WAP Forum™ Web site (http://www.wapforum.org).

As explained in the above mentioned document it is often necessary for the client to activate the bearer for the delivery of the push content. For this purpose the client comprises an application that listens to Session Initiation Requests (SIR) from the PPG, and responds by activating the bearer service that the terminal considers appropriate and then contacting the desired PPG. The SIR is typically sent to the client using connectionless push and is e.g. fitted in a single SMS.

The WAP push framework allows any MIME media type to be delivered between the PI and the client. Some specific media types have also been defined specifically to add capabilities not already provided by existing MIME types. One example of such a specific media type is the Service Indication (SI) media type, which provides the ability to send notifications to clients in an asynchronous manner. The notifications may for instance be about new, e-mails, changes in stock price or score in a soccer game, news headlines, advertising, reminders of e.g. low prepaid balance, etc. A basic SI contains a short message and a Uniform Resource Identifier (URI) indicating a service. The message is sent to an appropriate application in the client and is presented to the end-user upon reception. The user is given the choice to either start the service indicated by the URI immediately, or postpone the SI for later handling. When the user chooses to start the service indicated by the URI the application initiates set-up of a bearer service according to the requirements that are specified for the service in the terminal.

Another example of a media type that is specifically defined for push is the Service Loading (SL) media type. Unlike SI, the SL does not imply any user involvement. The SL includes a URI that points to some content that is loaded by the client without end-user confirmation and an instruction whether the content should be executed/rendered or placed in a cache memory. After reception of the SL in an application in the client terminal, the receiving application initiates set-up of a bearer service for delivery of the content from the PI to the client. Further information about SL and how SL is coordinated with other activities in the client terminal can be found in the document "Service Loading, Version 31-Jul-2001", published on the WAP Forum™ Web site (http:/ /www.wapforum.org).

In prior art document WO 01/33782, a method relating to transmission of multimedia messages comprising at least one multimedia component in a wireless network is described. In addition to the multimedia message, a notification message is also transmitted over the radio path. The notification message comprises information about at least one property of said at least one multimedia component. The at least one property is exemplified by size, type and priority. A bearer is selected on the basis of the property data conveyed by the notification message. The multimedia component is transferred from the server to the terminal over the radio path using the bearer selected by the terminal.

A common feature for SI and SL is that it is the client that initiates set-up of the bearer service for content delivery even though it is the PI (i.e. the server according to the client/ server model) that makes the first service initiation by sending a Service Indication or Service Loading message to the client in order to inform the client of a service content that the PI wishes to deliver to the client. When requesting the set-up of the bearer service the client also requests a particular quality of service (QoS) for the bearer service. The requested QoS for the bearer service is specified by means of a set of QoS parameters. The mapping from application level to the requested bearer QoS is done in the client terminal and depends on the terminal vendor's coding of the terminal. It is therefore possible that the same Service Indication message may result in different bearer QoS when sent to terminals from different vendors. It is also possible that the QoS requested by the client terminal is not at all considered to be appropriate for the service content delivery from the viewpoint of the PI who provides the service.

### SUMMARY OF THE INVENTION

An object of the present invention is to provide devices and methods that allow a service provider of a push message initiated service to influence the selection of quality of service parameters for a bearer service that is set-up for receiving a service content from the service provider in a mobile client terminal.

The above stated object is achieved by means of a mobile communication terminal according to claim 1, a method in a mobile communication terminal according to claim 10, a network node according to claim 19 and a method in a network node according to claim 31.

The basic idea of the present invention is to transfer, not only an indication of the service content in the push message by means of which the service provider initiates the service, but also a set of recommended quality of service parameters. Thereby the mobile terminal can retrieve the set of recommended quality of service parameters upon reception of the push message and can take the set of recommended quality of service parameters into consideration when requesting the bearer service for reception of the service content indicated by the push message. Implementation of the basic idea of the present invention requires a new modified mobile terminal, a new modified network node as well as new methods in the mobile terminal and the network node, which are all provided according to different aspects of the present invention.

An advantage of the present invention is that it allows for the service provider to influence the quality of service parameters that the mobile terminal requests. This may be beneficial since the service provider knows the character of the service content and therefore may be better able than the mobile terminal to decide suitable quality of service parameters for delivery of the service content. The service provider may also want to influence the quality of service parameters that are used in conjunction with one of his services in order to preserve his image and reputation as a service provider who provides good quality services. If too low quality of service is requested by the terminal this may have a bad reflection on the provider of the service content even though the low quality of service was due to the construction of the terminal.

Another advantage of the present invention is that it makes it possible to achieve more uniform quality between different terminals for the same service or type of service. Since the mobile terminal, according to a preferred embodiment of the present invention, may be arranged to request the set of recommended quality of service parameters for the bearer service it is possible to lessen the impact of the coding of the mobile terminal on the quality of service of the bearer service. In prior art solutions the mobile terminal is usually "hard coded" to request a pre-defined PDP context. The coding may vary between different terminal vendors, which may lead to different quality of service for terminals from different vendors.

Yet another advantage of the present invention is that it may allow a flexible determination of the quality of service parameters that are requested for the bearer service. By means of the present invention the mobile terminal does not need to be limited to request the quality of service parameters of just one or a few pre-defined bearer services.

Further advantages and features of embodiments of the present invention will become apparent when reading the following detailed description in conjunction with the drawings.

### BRIEF DESCRIPTION OF THE DRAWINGS

Fig. 1 is a schematic block diagram illustrating the general network architecture of a mobile communication system in which the present invention may be used.
Fig. 2 is a flow diagram illustrating schematically a service according to the prior art that is initiated by means of a push message from an application server.
Fig. 3 is a flow diagram illustrating schematically a service, which corresponds to the service illustrated in Fig. 2, but for which the present invention is applied.
Fig. 4 is a schematic signaling/flow diagram that illustrates the function of an exemplary embodiment of a network node according to the present invention and an exemplary embodiment of a mobile communication terminal according to the present invention.
Fig. 5 is a schematic signaling/flow diagram that illustrates the function of an alternative exemplary embodiment of a network node according to the present invention and an exemplary embodiment of a mobile communication terminal according to the present invention.
Fig. 6 is a schematic signaling/flow diagram that illustrates the function of yet another alternative exemplary embodiment of a network node according to the present invention and an exemplary embodiment of a mobile communication terminal according to the present invention.
Fig. 7 is a schematic signaling/flow diagram that illustrates the function of a further alternative exemplary embodiment of a network node according to the present invention and an exemplary embodiment of a mobile communication terminal according to the present invention.

### DETAILED DESCRIPTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

The present invention is applicable to packet switched services in a mobile communication system, which services are initiated from a service provider by means of a push message. Such services include packet switched communication between a mobile client terminal of an end-user and an application server. The mobile communication system includes a radio network such as a WCDMA, CDMA2000, Wireless LAN or GPRS network in which the mobile client terminal resides.

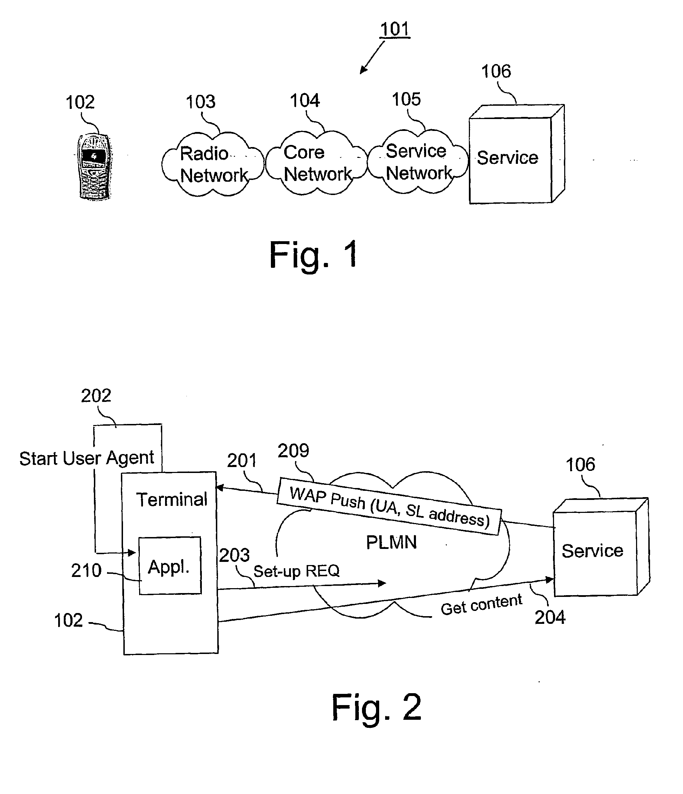

Fig. 1 is a schematic block diagram illustrating the general network architecture of a mobile communication system in which the present invention may be used. The mobile system 101 in fig. 1 comprises a mobile client terminal 102 which may communicate with a network node 106 of a service provider and thereby receive a service that is offered by the service provider. The communication between the client terminal 102 and the network node 106 is carried out via a radio network 103, a core network 104 and a service network 105. The radio network 103 may for instance be a UTRAN (UMTS Terrestrial Radio Access Network) or CDMA2000 network, the core network 104 may for instance be a UMTS Core Network and the service network may for instance be the Internet or a private IP network of a service provider. The network node 106 of the service provider may for instance be an application server or a Push Proxy Gateway.
Fig. 2 is a flow diagram illustrating schematically a service according to the prior art that is initiated by means of a push message from a network node of a service provider. The service may for instance be a service that allows the user of the mobile client terminal to subscribe to pictures showing soccer goals during the World Championships. When pictures of a new soccer goal are available the service provider will inform the user of the new pictures by means of push message. Fig. 2 illustrates that a network node 106 of the service provider initiates the service by sending a push message 209, step 201, to the mobile client terminal 102. In this example the push message 209 is a WAP Push Service Loading (SL) message that is sent to the mobile client terminal via WAP Push and SMS and the service content, i.e. the pictures, is indicated by a URI included in the SL message. The SL message is addressed to an appropriate user agent or application 210 in the mobile client terminal. In this case we assume that the service is to be delivered on an MMS bearer so the push message is addressed to an MMS agent. When the SL message is received in the mobile client terminal it is forwarded to the targeted user agent 210, which then starts, step 202, and thereafter requests a pre-configured PDP context with an MMS bearer, step 203. When the mobile client terminal has received confirmation that the PDP context has been set up the terminal can get the service content by means of the received URI, step 204.

It is evident from the illustration in fig. 2 that it is the service provider that initiates the service but it is the client terminal 102 that requests set-up of the bearer service for delivery of the service content. It is therefore the mobile client terminal that requests the PDP context parameters and thereby the quality of service (QoS) of the bearer. Today each user agent or application is combined with a pre-configured PDP context with a selected QoS class which is "hard coded" in the mobile client terminal.

In UMTS (Universal Mobile Telecommunication System) QoS is defined with a set of attributes that specifies the UMTS bearer service. The UMTS QoS attributes are the following:
- Traffic class
- Maximum bit-rate
- Guaranteed bit-rate
- Delivery order
- Maximum SDU size
- SDU format information
- SDU error ratio
- Residual bit error ration
- Delivery of erroneous SDUs
- Transfer delay
- Traffic handling priority
- Allocation/Retention Priority
- Source statistics descriptor
- Signaling Indication

These attributes can be mapped to the pre-defined UMTS QoS classes: Conversational class, Streaming class, Interactive class and Background class. More detailed information about UMTS QoS can be found in the technical specifications 3GPP TS 23.107 V6.1.0 (2004-03) and 3GPP TS 23.207 V6.2.0 (2004-03).

The QoS classes can be negotiated and managed by using PDP context management. Application level QoS requirements are mapped to PDP context parameters in the mobile client terminal. In prior art solutions pre-configurations of PDP contexts are made in the client terminal such that when a packet switched application starts and connects to the network a matching pre-configured PDP context is activated. This PDP context has a selected QoS class that should match the desired QoS requirements of the application. If for instance the application is a WAP browser or MMS client the QoS class of the activated PDP context is usually the Interactive class.

Thus in the prior art solutions the selection of QoS parameters for the bearer service that is set up for delivery of the service content in the example illustrated in Fig. 2 depends on the terminal vendor's configuration of the mobile client terminal. The service provider cannot influence the selection of the QoS parameters. This is in many instances problematic, especially from the viewpoint of the service provider, but also from a user perspective, when it results in set-up of a bearer service with a QoS that is not appropriate for the delivery of the service content. The service provider is usually interested in being able to ensure that the offered service is delivered with a certain minimum quality. If the quality of service is bad this may have a negative impact on the service provider's reputation even if the bad quality is caused by a network operator or terminal vendor. The user of the service will become annoyed if the QoS is bad and will probably blame the service provider for the bad quality. It is also possible that a user with one terminal gets unacceptably bad QoS when receiving a particular service content while another user, with a terminal from another vendor, gets acceptable QoS when receiving the same service content.

According to the present invention it is possible for the service provider to influence the selection of the QoS parameters of a bearer service that is used for the delivery of a service content of a push message initiated service. This is achieved by means of modifying the push message to also include recommended QoS parameters that the service provider recommends for the bearer service to be set up by the mobile client terminal.

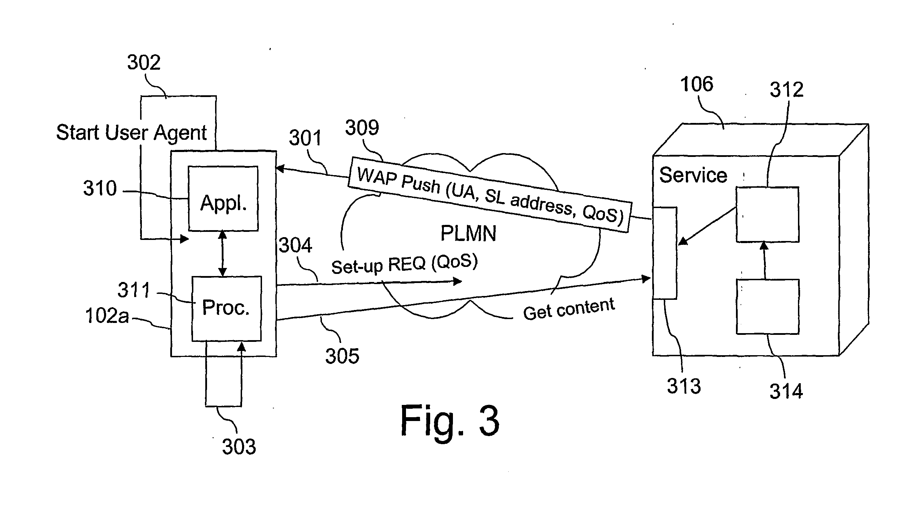

Fig. 3 is a flow diagram illustrating schematically a service, which corresponds to the service illustrated in Fig. 2, but for which the present invention is applied. Fig. 3 illustrates that a network node 106a of the service provider initiates the service by sending a push message 309, step 301, to the mobile client terminal 102a. According to the present invention the push message 309 includes a set of recommended QoS parameters. The push message 309 may for instance be a WAP Push Service Loading (SL) message that has been modified by adding the set of recommended QoS parameters. When the push message 309 is received in the mobile client terminal it is forwarded to the targeted user agent 310, which then starts, step 302. The user agent 310 or supporting software in the mobile client terminal is provided with processing means 311 which then retrieves and processes the set of recommended QoS parameters from the push message to determine PDP context parameters that correspond to the set of recommended QoS parameters, step 303. Thereafter, in step 304, the user agent requests a PDP context with the PDP context parameters that was determined in step 303. When the mobile client terminal has received confirmation that the PDP context has been set up the terminal can get the service content, step 305.

The procedure illustrated in Fig. 3 allows the service provider to influence the QoS of the bearer service instead of relying on "hard coded" QoS parameters inside the mobile client terminal. To implement the procedure of fig. 3 modifications are necessary on the side of the sender of the push message in order to modify the push message to also include the set of recommended QoS parameters and on the terminal side in order to interpret the modified push message.

A mobile terminal 102a according to the invention is adapted to retrieve and process the set of recommended QoS parameters in the push message 309 that indicates a service content for delivery to the mobile terminal. Such a mobile terminal can be achieved by complementing a prior art terminal with processing means 311 for retrieving the set of recommended QoS parameters from the push message, processing the retrieved set of parameters and requesting QoS for a bearer service based on the retrieved set of parameters. The processing means 311 will according to a preferred embodiment be software code means of the application 310 that the push message 309 targeted. It is also possible that the processing means are software code means of a supporting software function, which is external from the application and which the application calls upon reception of the push message. How to implement such software code means in order for it to be able to perform the functions described herein using common computer languages is well known to the person skilled in the art and will not be explained in further detail.

According to a preferred embodiment of the mobile terminal 102a according to the invention the mobile terminal is arranged to request the same QoS for the bearer service to be set up as is recommended by the service provider by means of the set of recommended QoS parameters in the push message 309. It is however also possible that the mobile terminal processes the set of recommended QoS parameters and decides to request a slightly different QoS for the bearer service. The terminal vendor may for instance implement the mobile terminal to always add a margin to any bandwidth that the service provider recommends. Assume for instance that the push message includes a QoS parameter that indicates that the service provider recommends 64 kb/s guaranteed bit rate for the bearer service. The mobile terminal may then be implemented to add a margin of 2 kb/s when processing the QoS parameters in the push message so that the mobile terminal requests a 66 kb/s guaranteed bit rate for the bearer service. The idea of the invention is thus to allow the mobile terminal to base its QoS request on the QoS that the service provider recommends, but not be completely restricted by it.

The push message 309 may be any type of pushed message from a service provider that initiates a service by means of including information that the service provider has a service content to deliver to the mobile terminal. According to the invention the push message 309 also includes the set of recommended QoS parameters. The push message may for instance be a WAP Push Service Indication message or a WAP Push Service Loading message with the QoS information in the form of the set of recommended QoS parameters added. The information that the service provider ha a service content to deliver to the terminal may for instance be a URI (Uniform Resource Identifier) indicating the service content.

The push message 309 may be pushed to the mobile terminal using different techniques. One technique is to deliver the push message in an SMS. If the mobile terminal already has a primary PDP context established for another service it may be possible to transfer the push message to the terminal 102a over the primary PDP context. The mobile terminal will then request a secondary PDP context for the delivery of the service content indicated by the push message 309.

In some cases it may be advisable to not set up the bearer service for receiving the service content when the push message is received. This may be the case if for instance the terminal is low on battery, is currently roaming or is located abroad and the user's subscription does not support service delivery abroad. In such cases the mobile terminal 102a may be arranged to reject the offered service by not responding to the push message 309 or to delay the reception of the offered service until for instance the battery has been charged or the terminal is no longer roaming.

On the network side, i.e. the side that creates and sends the push message 309, there are a number of different possible embodiments of the present invention. Different network nodes may be adapted to include the set of recommended QoS parameters in the message to be pushed to the terminal. The QoS information may for instance be provided by an application server, a policy server or a Push Proxy Gateway.

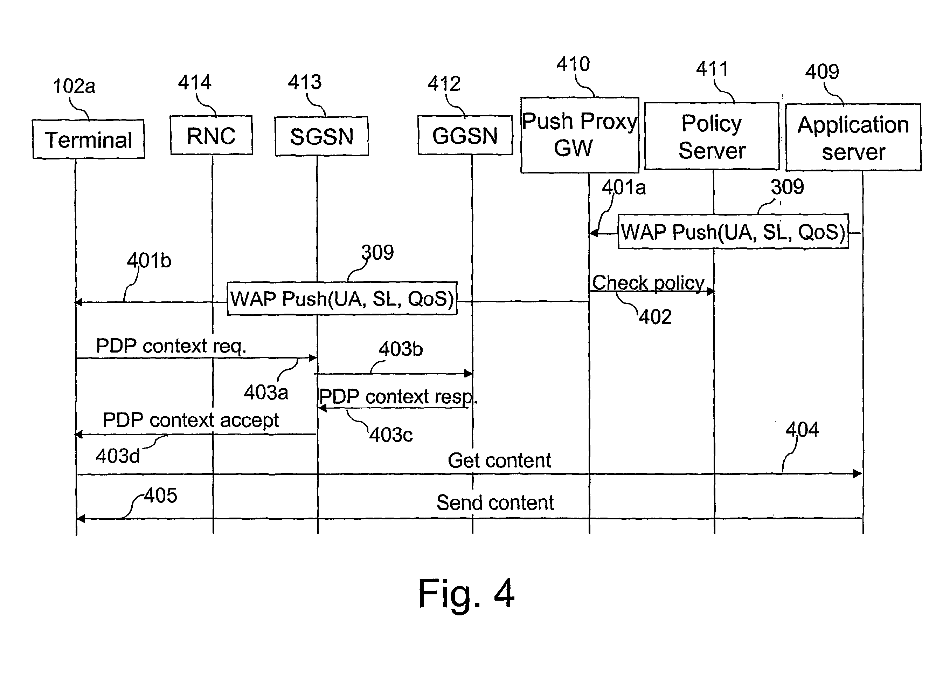

Fig. 4 is a schematic flow diagram that illustrates an example of the situation where an application server 409 inserts the QoS information in the push message 309. In this example the push message is a WAP Push message that is created in the application server 409 that provides the service content for delivery to the terminal 102a. The message 309 includes, according to this embodiment, an indication of the targeted user agent (UA), information of an ordinary WAP Push Service Loading message SL and the set of recommended QoS parameters. The push message 309 is sent to a Push Proxy Gateway 410 in a step 401a. The message may be sent with a modified version of the PAP API (Push Access Protocol Application Programming Interface) defined in the OMA/WAP standard today, see the document "Push Access Protocol, Version 29-Apr-2001", published on the WAP Forum™ Web site (http://www.wapforum.org). The API need to be modified to support the inclusion of the set of QoS parameters in the push message. Before forwarding the message to the terminal 102a the Push Proxy Gateway checks with a policy server 411 that the application server 409 is allowed to send the message to the terminal 102a, step 402. After confirmation from the policy server 411 the Push Proxy Gateway 410 forwards the message 309 including the set of recommended QoS parameters to the terminal 102a. The forwarding is in this example performed by means of SMS. As mentioned above the terminal 102a will then start the specified User Agent, process the message and thereafter the User Agent will start a PDP context by sending a request to activate a PDP context to a SGSN (Serving GPRS Support Node) 413 of a UMTS core network via a RNC (Radio Network Controller) 414 of a UTRAN, step 403a. This request will preferably include the set of recommended QoS parameters that was sent in the push message 309. As is well known to the person skilled in the art the PDP context activation then continues with a Create PDP Context request from the SGSN 413 to a GGSN (Gateway GPRS Support Node) 412, a Create PDP context response from the GGSN to the SGSN, and an Activate PDP Context accept from the SGSN to the terminal, steps 403b-d. When the PDP context has been set up the terminal can fetch the service content that was specified in the push message, step 404, and the application server 409 delivers the service content to the terminal in a step 405.

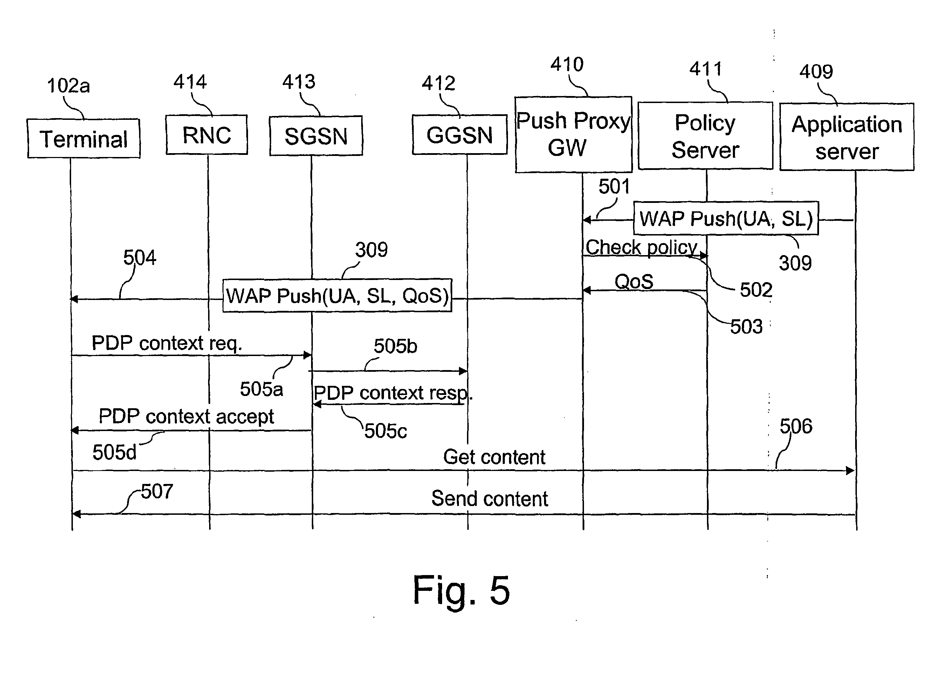

Fig. 5 is a schematic flow diagram that illustrates an example of an alternative embodiment in which the policy server 411 provides the QoS information in the push message 309. In this case the application server 409 sends a WAP Push message to the Push Proxy Gateway 410 in the same way as in prior art solutions, step 501. The Push Proxy Gateway 410 then checks with the policy server that the application server is allowed to send the message to the terminal, step 502. The policy server sends the set of recommended QoS parameters to be forwarded to the terminal in the push message in response, step 503. The Push Proxy Gateway 410 then forwards the message received from the application server with the set of QoS requirements appended to the terminal 102a by means of SMS in a step 504. The remaining steps 505a-d, 506 and 507 illustrated in fig. 5 are identical to the steps 404a-d, 405 and 406 illustrated in fig. 4 and explained above.

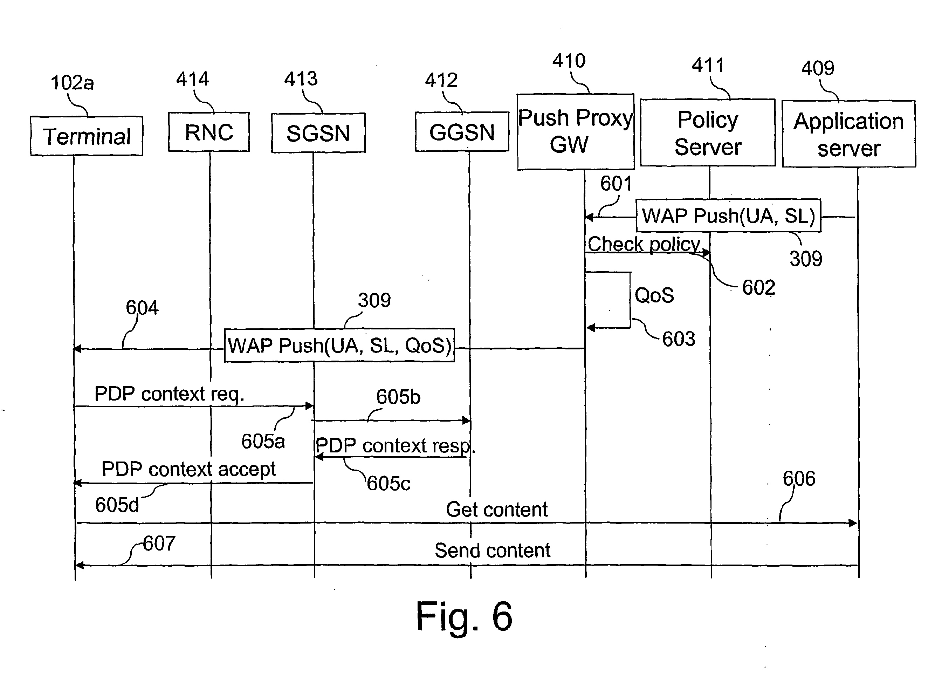

Fig. 6 is a schematic flow diagram that illustrates an example of another alternative embodiment in which the Push Proxy Gateway 410 provides and inserts the QoS information in the push message 309. In this case the application server 409 sends a WAP Push message to the Push Proxy Gateway 410 in the same way as in prior art solutions, step 601. The Push Proxy Gateway 410 then checks with the policy server 411 that the application server is allowed to send the message to the terminal, step 602. After confirmation from the policy server the Push Proxy Gateway determines the set of QoS parameters to be sent to the terminal and inserts the set in the push message that was received from the application terminal, step 603. The Push Proxy Gateway may be implemented to make this determination of QoS parameters based on a set of rules that e.g. depend on the type of service content, the application that provides the service content and/or the network in which the terminal resides. Then the Push Proxy Gateway 410 forwards the created push message with the set of QoS requirements by means of SMS to the terminal 102a in a step 604. The remaining steps 605a-d, 606 and 607 illustrated in fig. 6 are identical to the steps 404a-d, 405 and 406 illustrated in fig. 4 and explained above.

From the examples illustrated in fig. 4, 5 and 6 it is apparent that different network nodes may be adapted to determine and insert the recommended QoS parameters in the message to be pushed to the terminal. The network node 106a illustrated in fig. 3 may thus represent e.g. an application server 409, a policy server 411 or a Push Proxy Gateway 410. In order to insert the recommended QoS parameters in the push message 309 the network node will preferably be implemented with software code means 312 that support the creation of the push message that includes the set of recommended QoS parameters. The network node will also have to include an interface 313 for pushing the message to the terminal 102a. The node that is responsible for determining the recommended QoS parameters will have to be provided with means 314 for doing this. Such means may for instance be software code means that define rules or formulas for deriving the recommended QoS parameters based some specific criteria. Such specific criteria on which the recommended QoS parameters may depend may for instance be the type of subscription of the user of the terminal, the type of service content to be delivered to the terminal, the application that delivers the service, time of day or some relevant network information such as network load or geographic location of the terminal.

Different criteria may be possible to consider depending on the node that determines the QoS parameters. If for instance the service provider is CNN, CNN may have an agreement with the network operator to always receive 128 kb/s guaranteed bit rate for its services. In that case the node that determines the recommended QoS parameters may be arranged to determine that, when CNN is delivering the service content, one of the recommended QoS parameters should be 128 kb/s guaranteed bit rate. Another example is when the recommended QoS parameters depend on the subscription of the user of the terminal. Suppose that a first user has a "gold subscription" with a network operator and a second subscription has a "silver subscription" with the network operator. In that case it may be determined by e.g. the policy server that 128kb/s guaranteed bit rate is a recommended QoS parameter if the push message is to be sent to the first terminal and that 64 kb/s guaranteed bit rate is a recommended QoS parameter if the push message is to be sent to the second user.

It is also possible that several network nodes are involved in determining the set of recommended QoS parameters. The application server may for instance determine a first set of recommended QoS parameters which the policy server then modifies after having checked the subscription of the user of the terminal. The determination of the recommended QoS parameters may also be determined based on a negotiation between several network nodes.

The set of recommended QoS parameters may include a single parameter value or several parameters. The set of recommended QoS parameters may be in the form of explicit parameter values in the form of recommended values for defined UMTS QoS attributes or PDP context parameters. It is also possible that the set of recommended QoS parameters is an indication of a recommended pre-defined UMTS QoS class for which QoS parameters are predetermined.

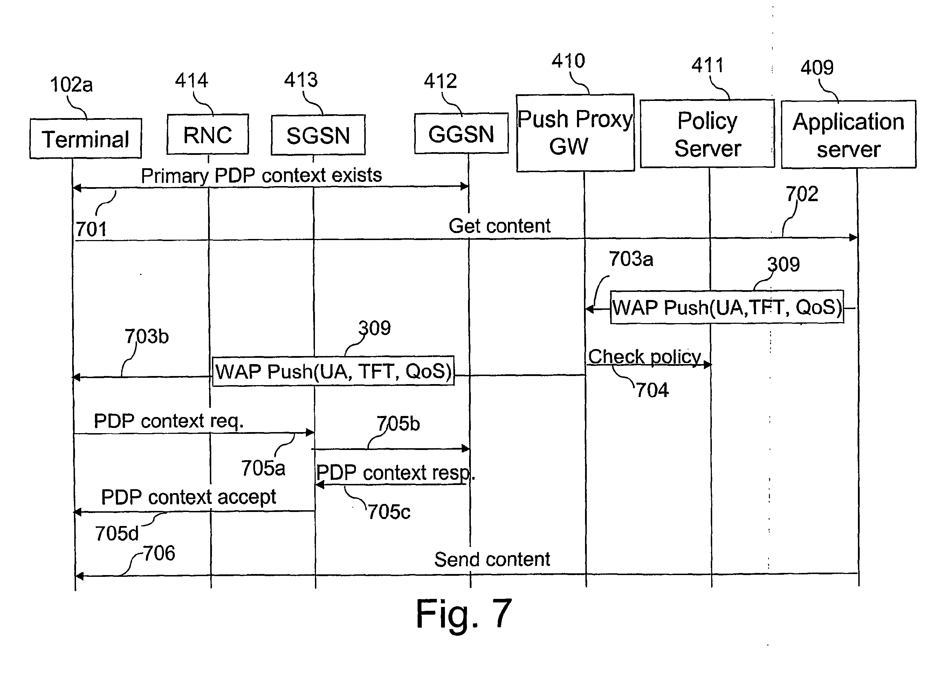

Fig. 7 is a schematic flow diagram that illustrates a scenario in which a primary PDP context 701 exists and the push message 309 is forwarded to the terminal 102a over the primary PDP context. The primary PDP context may have been set-up to enable the user of the terminal to browse the Internet. While browsing the user may indicate that he wishes to listen to an MP3-file, step 702 which causes the application server 409 to send the push message 309 to the Push Proxy Gateway 410, step 703a, in order to initiate set-up of a secondary PDP-context. The Push Proxy Gateway may initiate a policy check, step 704, before forwarding the push message 309 to the terminal 102a. The push message 309 is forwarded to the GGSN 412 using regular IP connectivity and from the GGSN 412 to the terminal 102a over the primary PDP context 701. After processing of the push message 309 and the set of recommended QoS parameters in the terminal 102a, the secondary PDP context is set-up, steps 705a-705d. The service content is then delivered to the terminal 102a over the secondary PDP context, step 706, which allows the user of the terminal to listen to the MP3-file. The illustration of the push message 309 in fig. 7 shows that the push message includes a TFT (Traffic Flow Template). The TFT is - sent - in - order to provide - a mechanism- for determining on which of the two PDP-contexts a payload is to be sent, as is well known to the person skilled in the art.

In this application it is mentioned that the set of recommended QoS parameters is a set of QoS parameters that the service provider recommends that the terminal requests for a bearer service for reception of the service content. It should be noted that this phrase is intended to encompass all of the above mentioned examples in which different network nodes determine the recommended QoS parameters based on different criteria. The term "service provider" is thus to be interpreted widely and to encompass e.g. both the provider of the service content and the network operator that provides the network bearer service.

From the exemplary embodiments of the present invention it is clear that the present invention allows a service provider to influence the QoS that a terminal requests for a bearer service for delivery of a service content that was indicated in a push message from the service provider. This is possible since the present invention provides the possibility to include a set of recommended QoS parameters in the push message.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A mobile communication terminal (102a) comprising an application (310) for receiving at least one packet data service from a service provider (106a), which application (310) is arranged to receive a pushed service indicating message (309) from the service provider, which service indicating message includes information that the service provider has a service content to deliver to the terminal, and which application is further arranged to initiate set-up of a bearer service for reception of said service content, **characterised in that** said terminal further includes processing means (311) for
retrieving a set of recommended quality of service parameters that is included in the received service indicating message (309), which set of recommended quality of service parameters is a set of quality of service parameters within a bearer that the service provider recommends that the terminal requests for a bearer of the bearer service for reception of the service content;
processing the set of recommended quality of service parameters to determine a set of processed quality of service parameters based on said set of recommended quality of service parameters; and for
requesting the set of processed quality of service parameters for the bearer of the bearer service for reception of said service content.

2. The mobile communication terminal (102a) according to claim 1, wherein said set of processed quality of service parameters equals said set of recommended quality of service parameters.

3. The mobile communication terminal (102a) according to claim 1 or 2, wherein said bearer service is a Packet Data Protocol Context.

4. The mobile communication terminal (102a) according to any of the preceding claims, wherein said pushed service indicating message (309) is a WAP Push Service Loading message that has been modified by appending the set of recommended quality of service parameters.

5. The mobile communication terminal (102a) according to any of claims 1-3, wherein said pushed service indicating message is a WAP Push Service Indication message that has been modified by appending the set of recommended quality of service parameters.

6. The mobile communication terminal (102a) according to any of claims 1-3, wherein said terminal is arranged to receive said pushed service indicating message over a pre-established primary Packet Data Protocol Context (701) and wherein said bearer service for reception of said service content is a secondary Packet Data Protocol Context.

7. The mobile communication terminal (102a) according to any of the preceding claims, wherein the information that the service provider has a service content to deliver to the terminal comprises a Uniform Resource Identifier, URI, indicating the service content.

8. The mobile communication terminal (102a) according to any of the preceding claims, wherein said set of recommended quality of service parameters comprises an indication to a pre-defined UMTS QoS class.

9. The mobile communication terminal (102a) according to any of the preceding claims, wherein said set of recommended quality of service parameters comprises a recommended value for at least one UMTS QoS attribute.

10. A method in a mobile communication terminal (102a) comprising an application (310) for receiving at least one packet data service from a service provider (106a), which method includes the step of:
the application receiving (301) a pushed service indicating message (309) from the service provider, which service indicating message includes information that the service provider has a service content to deliver to the terminal, **characterised by** the further steps of retrieving (303) a set of recommended quality of service parameters that is included in the received service indicating message (309), which set of recommended quality of service parameters is a set of quality of service parameters within a bearer that the service provider recommends that the terminal requests for a bearer of the bearer service for reception of the service content;
processing (303) the set of recommended quality of service parameters to determine a set of processed quality of service parameters based on said set of recommended quality of service parameters; and
the application initiating (304) setup of a bearer service for reception of said service content requesting the set of processed quality of service parameters for the bearer of the bearer service.

11. The method according to claim 10, wherein said set of processed quality of service parameters equals said set of recommended quality of service parameters.

12. The method according to claim 10 or 11, wherein said bearer service is a Packet Data Protocol Context.

13. The method according to any of claims 10-12, wherein said pushed service indicating message (309) is a WAP Push Service Loading message that has been modified by appending the set of recommended quality of service parameters.

14. The method according to any of claims 10-12, wherein said pushed service indicating message is a WAP Push Service Indication message that has been modified by appending the set of recommended quality of service parameters.

15. The method according to any of claims 10-12, wherein said pushed service indicating message (309) is received over a pre-established primary Packet Data Protocol Context (701) and wherein said bearer service for reception of said service content is a secondary Packet Data Protocol Context.

16. The method according to any of claims 10-15, wherein the information that the service provider has a service content to deliver to the terminal comprises a Uniform Resource Identifier, URI, indicating the service content.

17. The method according to any of claims 10-16, wherein said set of recommended quality of service parameters comprises an indication to a predefined UMTS QoS class.

18. The method according to any of claims 10-17, wherein said set of recommended quality of service parameters comprises a recommended value for at least one UMTS QoS attribute.

19. A network node (106a) in a network for providing a set of packet data services from a service provider to mobile client terminals, which network node comprises:
message creating means (312) for creating a service indicating message (309) for push transmission to a first client terminal (102a); and
an interface (313) for pushing the service indicating message (309) to the first client terminal (102a), wherein the message creating means (312) are arranged to include, in the service indicating message (309), information that the service provider has a service content to deliver to the first client terminal and **characterised in that** the message creating means (312) are arranged to include, in the service indicating message (309), a set of recommended quality of service parameters, which the service provider recommends that the first client terminal requests for a bearer of a bearer service for reception of the service content.

20. The network node (106a) according to claim 19, wherein said network node further comprises parameter determining means (314) for determining said set of recommended quality of service parameters based on at least one of the following types of input information:
type of the service content, type of subscription of the user of the terminal, information about the network in which the bearer service is to be set up, and provider of the service content.

21. The network node (106a) according to claim 19 or 20, wherein said set of recommended quality of service parameters is a set of recommended Packet Data Protocol Context quality of service parameters.

22. The network node (106a) according to any of claims 19 to 21, wherein said service indicating message (309) is a WAP Push Service Loading message that has been modified by appending the set of recommended quality of service parameters.

23. The network node (106a) according to any of claims 19 to 21, wherein said service indicating message is a WAP Push Service Indication message that has been modified by appending the set of recommended quality of service parameters.

24. The network node (106a) according to any of claims 19 to 23, wherein said network node is arranged to push said service indicating message to the first client terminal (102a) over a pre-established primary Packet Data Protocol Context (701) and wherein said set of recommended quality of service parameters is a set of recommended Packet Data Protocol Context quality of service parameters for a secondary Packet Data Protocol Context.

25. The network node (106a) according to any of claims 19 to 24, wherein the information that the service provider has a service content to deliver to the terminal comprises a Uniform Resource Identifier, URI, indicating the service content.

26. The network node (106a) according to any of claims 19 to 25, wherein said set of recommended quality of service parameters comprises an indication to a pre-defined UMTS QoS class.

27. The network node (106a) according to any of claims 19 to 26, wherein said set of recommended quality of service parameters comprises a recommended value for at least one UMTS QoS attribute.

28. The network node (106a) according to any of claims 19 to 27, wherein said network node is an application server (409) of the service provider.

29. The network node (106a) according to any of claims 19 to 27, wherein said network node is a policy server (411), which is further arranged to check that the service provider is allowed to push the service indicating message (309) to the first client terminal (102a).

30. The network node (106a) according to any of claims 19 to 27, wherein said network node is a Push Proxy Gateway (410) which is arranged to create said service indicating message (309) based on a service message received from an application server (409).

31. A method in a network node (106a) in a network for providing a set of packet data services from a service provider to mobile client terminals, which method comprises:
creating a service indicating message (309) for push transmittal to a first client terminal (102a); and
pushing (301) the service indicating message (309) to the first client terminal (102a), wherein the service indicating message (309) includes information that the service provider has a service content to deliver to the first client terminal and the method is **characterised in that** the service indicating message (309) includes a set of recommended quality of service parameters, which the service provider recommends that the first client terminal requests for a bearer of a bearer service for reception of the service content.

32. The method according to claim 31, wherein the method further comprises determining said set of recommended quality of service parameters based on at least one of the following types of input information: type of the service content, type of subscription of the user of the terminal, information about the network in which the bearer service is to be set up, and provider of the service content.

33. The method according to claim 31 or 32, wherein said set of recommended quality of service parameters is a set of recommended Packet Data Protocol Context quality of service parameters.

34. The method according to any of claims 31 to 33, wherein said service indicating message (309) is a WAP Push Service Loading message that is modified by appending the set of recommended quality of service parameters.

35. The method according to any of claims 31 to 33, wherein said service indicating message is a WAP Push Service Indication message that is modified by appending the set of recommended quality of service parameters.

36. The method according to any of claims 31 to 35, wherein said service indicating message (309) is pushed (703b) to the first client terminal (102a) over a pre-established primary Packet Data Protocol Context (701) and wherein said set of recommended quality of service parameters is a set of recommended Packet Data Protocol Context quality of service parameters for a secondary Packet Data Protocol Context.

37. The method according to any of claims 31 to 36, wherein the information that the service provider has a service content to deliver to the terminal comprises a Uniform Resource Identifier, URI, indicating the service content.

38. The method according to any of claims 31 to 37, wherein said set of recommended quality of service parameters comprises an indication to a predefined UMTS QoS class.

39. The method according to any of claims 31 to 38, wherein said set of recommended quality of service parameters comprises a recommended value for at least one UMTS QoS attribute.

40. The method according to any of claims 31 to 39, wherein said method further includes checking if the service provider is allowed to push the service indicating message (309) to the first client terminal (102a) by means of checking a pre-determined policy.

## Patentansprüche

1. Mobiles Kommunikationsendgerät (102a), umfassend eine Anwendung (310) zum Empfangen zumindest eines Paketdatendienstes von einem Dienstanbieter (106a), wobei diese Anwendung (310) dafür eingerichtet ist, eine Push-Dienstanzeigemitteilung (309) vom Dienstanbieter zu empfangen, wobei diese Dienstanzeigemitteilung Information aufweist, nämlich dass der Dienstanbieter einen Dienstinhalt zur Zustellung an das Endgerät hat, und wobei diese Anwendung ferner dafür eingerichtet ist, die Einrichtung eines Trägerdienstes zum Empfang des Dienstinhalts einzuleiten, **dadurch gekennzeichnet, dass** das Endgerät ferner Verarbeitungsmittel (311) für folgende Schritte aufweist:
Abrufen eines Satzes empfohlener Dienstqualitätsparameter, der in der empfangenen Dienstanzeigemitteilung (309) enthalten ist, wobei dieser Satz empfohlener Dienstqualitätsparameter ein Satz von Dienstqualitätsparametern innerhalb eines Trägers ist, die der Dienstanbieter empfiehlt, dass das Endgerät sie für einen Träger des Trägerdienstes zum Empfang des Dienstinhalts anfordere;
Verarbeiten des Satzes empfohlener Dienstqualitätsparameter, um einen Satz verarbeiteter Dienstqualitätsparameter basierend auf dem Satz empfohlener Dienstqualitätsparameter zu bestimmen; und
Anfordern des Satzes verarbeiteter Dienstqualitätsparameter für den Träger des Trägerdienstes zum Empfang des Dienstinhalts.

2. Mobiles Kommunikationsendgerät (102a) nach Anspruch 1, wobei der Satz verarbeiteter Dienstqualitätsparameter dem Satz empfohlener Dienstqualitätsparameter entspricht.

3. Mobiles Kommunikationsendgerät (102a) nach Anspruch 1 oder 2, wobei der Trägerdienst ein Paketdatenprotokoll-Kontext ist.

4. Mobiles Kommunikationsendgerät (102a) nach einem der vorhergehenden Ansprüche, wobei die Push-Dienstanzeigemitteilung (309) eine WAP-Push-Dienstlademitteilung ist, die durch Anfügung des Satzes empfohlener Dienstqualitätsparameter modifiziert worden ist.

5. Mobiles Kommunikationsendgerät (102a) nach einem der Ansprüche 1 bis 3, wobei die Push-Dienstanzeigemitteilung eine WAP-Push-Dienstanzeigemitteilung ist, die durch Anfügung des Satzes empfohlener Dienstqualitätsparameter modifiziert worden ist.

6. Mobiles Kommunikationsendgerät (102a) nach einem der Ansprüche 1 bis 3, wobei das Endgerät dafür eingerichtet ist, die Push-Dienstanzeigemitteilung über einen vorher eingerichteten primären Paketdatenprotokoll-Kontext (701) zu empfangen, und wobei der Trägerdienst zum Empfang des Dienstinhalts ein sekundärer Paketdatenprotokoll-Kontext ist.

7. Mobiles Kommunikationsendgerät (102a) nach einem der vorhergehenden Ansprüche, wobei die Information, dass der Dienstanbieter einen Dienstinhalt zur Zustellung an das Endgerät hat, einen Uniform Resource Identifier, URI, umfasst, der den Dienstinhalt anzeigt.

8. Mobiles Kommunikationsendgerät (102a) nach einem der vorhergehenden Ansprüche, wobei der Satz empfohlener Dienstqualitätsparameter einen Hinweis auf eine vorher definierte UMTS-QoS-Klasse umfasst.

9. Mobiles Kommunikationsendgerät (102a) nach einem der vorhergehenden Ansprüche, wobei der Satz empfohlener Dienstqualitätsparameter einen empfohlenen Wert für zumindest ein UMTS-QoS-Attribut umfasst.

10. Verfahren in einem Mobilen Kommunikationsendgerät (102a), umfassend eine Anwendung (310) zum Empfangen zumindest eines Paketdatendienstes von einem Dienstanbieter (106a), wobei dieses Verfahren die folgenden Schritte umfasst:
durch die Anwendung erfolgendes Empfangen (301) einer Push-Dienstanzeigemitteilung (309) vom Dienstanbieter, wobei diese Dienstanzeigemitteilung Information aufweist, nämlich dass der Dienstanbieter einen Dienstinhalt zur Zustellung an das Endgerät hat, **gekennzeichnet durch** die weiteren Schritte:
Abrufen (303) eines Satzes empfohlener Dienstqualitätsparameter, der in der empfangenen Dienstanzeigemitteilung (309) enthalten ist, wobei dieser Satz empfohlener Dienstqualitätsparameter ein Satz von Dienstqualitätsparametern innerhalb eines Trägers ist, die der Dienstanbieter empfiehlt, dass das Endgerät sie für einen Träger des Trägerdienstes zum Empfang des Dienstinhalts anfordere;
Verarbeiten (303) des Satzes empfohlener Dienstqualitätsparameter, um einen Satz verarbeiteter Dienstqualitätsparameter basierend auf dem Satz empfohlener Dienstqualitätsparameter zu bestimmen; und
**durch** die Anwendung erfolgendes Einleiten (304) der Einrichtung eines Trägerdienstes zum Empfang des Dienstinhalts, wobei der Satz verarbeiteter Dienstqualitätsparameter für den Träger des Trägerdienstes angefordert wird.

11. Verfahren nach Anspruch 10, wobei der Satz verarbeiteter Dienstqualitätsparameter dem Satz empfohlener Dienstqualitätsparameter entspricht.

12. Verfahren nach Anspruch 10 oder 11, wobei der Trägerdienst ein Paketdatenprotokoll-Kontext ist.

13. Verfahren nach einem der Ansprüche 10 bis 12, wobei die Push-Dienstanzeigemitteilung (309) eine WAP-Push-Dienstlademitteilung ist, die durch Anfügung des Satzes empfohlener Dienstqualitätsparameter modifiziert worden ist.

14. Verfahren nach einem der Ansprüche 10 bis 12, wobei die Push-Dienstanzeigemitteilung eine WAP-Push-Dienstanzeigemitteilung ist, die durch Anfügung des Satzes empfohlener Dienstqualitätsparameter modifiziert worden ist.

15. Verfahren nach einem der Ansprüche 10 bis 12, wobei die Push-Dienstanzeigemitteilung (309) über einen vorher aufgebauten primären Paketdatenprotokoll-Kontext (701) empfangen wird und wobei der Trägerdienst zum Empfang des Dienstinhalts ein sekundärer Paketdatenprotokoll-Kontext ist.

16. Verfahren nach einem der Ansprüche 10 bis 15, wobei die Information, dass der Dienstanbieter einen Dienstinhalt zur Zustellung an das Endgerät hat, einen Uniform Resource Identifier, URI, umfasst, der den Dienstinhalt anzeigt.

17. Verfahren nach einem der Ansprüche 10 bis 16, wobei der Satz empfohlener Dienstqualitätsparameter einen Hinweis auf eine vorher definierte UMTS-QoS-Klasse umfasst.

18. Verfahren nach einem der Ansprüche 10 bis 17, wobei der Satz empfohlener Dienstqualitätsparameter einen empfohlenen Wert für zumindest ein UMTS-QoS-Attribut umfasst.

19. Netzwerkknoten (106a) in einem Netzwerk zur Übergabe eines Satzes von Paketdatendiensten von einem Dienstanbieter an mobile Client-Endgeräte, wobei der Netzwerkknoten umfasst:
Mitteilungserzeugungsmittel (312) zur Erzeugung einer Dienstanzeigemitteilung (309) zur Push-Übertragung an ein erstes Client-Endgerät (102a); und
eine Schnittstelle (313) zur Push-Übertragung der Dienstanzeigemitteilung (309) an das erste Client-Endgerät (102a), wobei die Mitteilungserzeugungsmittel (312) dafür eingerichtet sind, in der Dienstanzeigenachricht (309) Information zu enthalten, nämlich dass der Dienstanbieter einen Dienstinhalt zur Zustellung an das erste Client-Endgerät hat, und **dadurch gekennzeichnet, dass** die Mitteilungserzeugungsmittel (312) dafür eingerichtet sind, in der Dienstanzeigemitteilung (309) einen Satz empfohlener Dienstqualitätsparameter zu enthalten, die der Dienstanbieter empfiehlt, dass das erste Client-Endgerät sie für einen Träger eines Trägerdienstes zum Empfang des Dienstinhalts anfordere;

20. Netzwerkknoten (106a) nach Anspruch 19, wobei der Netzwerkknoten ferner Parameterbestimmungsmittel (314) zur Bestimmung des Satzes empfohlener Dienstqualitätsparameter basierend auf zumindest einem der folgenden Typen von Eingabeinformation umfasst: Dienstinhaltstyp, Teilnehmerschaftstyp des Benutzers des Endgeräts, Information über das Netzwerk, in dem der Trägerdienst eingerichtet werden soll, und Anbieter des Dienstinhalts.

21. Netzwerkknoten (106a) nach Anspruch 19 oder 20, wobei der Satz empfohlener Dienstqualitätsparameter ein Satz empfohlener Paketdatenprotokoll-Kontext-Dienstqualitätsparameter ist.

22. Netzwerkknoten (106a) nach einem der Ansprüche 19 bis 21, wobei die Dienstanzeigemitteilung (309) eine WAP-Push-Dienstlademitteilung ist, die durch Anfügung des Satzes empfohlener Dienstqualitätsparameter modifiziert worden ist.

23. Netzwerkknoten (106a) nach einem der Ansprüche 19 bis 21, wobei die Dienstanzeigemitteilung eine WAP-Push-Dienstanzeigemitteilung ist, die durch Anfügung des Satzes empfohlener Dienstqualitätsparameter modifiziert worden ist.

24. Netzwerkknoten (106a) nach einem der Ansprüche 19 bis 23, wobei der Netzwerkknoten dafür eingerichtet ist, die Dienstanzeigemitteilung über einen vorher aufgebauten primären Paketdatenprotokoll-Kontext (701) an das erste Client-Endgerät (102a) als Push-Mitteilung zu übertragen, und wobei der Satz empfohlener Dienstqualitätsparameter ein Satz empfohlener Paketdatenprotokoll-Kontext-Dienstqualitätsparameter für einen sekundären Paketdatenprotokoll-Kontext ist.

25. Netzwerkknoten (106a) nach einem der Ansprüche 19 bis 24, wobei die Information, dass der Dienstanbieter einen Dienstinhalt zur Zustellung an das Endgerät hat, einen Uniform Resource Identifier, URI, umfasst, der den Dienstinhalt anzeigt.

26. Netzwerkknoten (106a) nach einem der Ansprüche 19 bis 25, wobei der Satz empfohlener Dienstqualitätsparameter einen Hinweis auf eine vorher definierte UMTS-QoS-Klasse umfasst.

27. Netzwerkknoten (106a) nach einem der Ansprüche 19 bis 26, wobei der Satz empfohlener Dienstqualitätsparameter einen empfohlenen Wert für zumindest ein UMTS-QoS-Attribut umfasst.

28. Netzwerkknoten (106a) nach einem der Ansprüche 19 bis 27, wobei der Netzwerkknoten ein Applikationsserver (409) des Dienstanbieters ist.

29. Netzwerkknoten (106a) nach einem der Ansprüche 19 bis 27, wobei der Netzwerkknoten ein Policy-Server (411) ist, der ferner dafür eingerichtet ist, zu prüfen, dass es dem Dienstanbieter erlaubt ist, die Dienstanzeigemitteilung (309) an das erste Client-Endgerät (102a) als Push-Mitteilung zu übertragen.

30. Netzwerkknoten (106a) nach einem der Ansprüche 19 bis 27, wobei der Netzwerkknoten ein Push-Proxy-Gateway (410) ist, der dafür eingerichtet ist, die Dienstanzeigemitteilung (309) basierend auf einer Dienstmitteilung, die von einem Applikationsserver (409) kommend empfangen wird, zu erzeugen.

31. Verfahren in einem Netzwerkknoten (106a) in einem Netzwerk zur Übergabe eines Satzes von Paketdatendiensten von einem Dienstanbieter an mobile Client-Endgeräte, wobei das Verfahren umfasst:
Erzeugen einer Dienstanzeigemitteilung (309) zur Push-Übertragung an ein erstes Client-Endgerät (102a); und
Übertragen (301) der Dienstanzeigemitteilung (309) als Push-Mitteilung an das erste Client-Endgerät (102a), wobei die Dienstanzeigemitteilung (309) Information aufweist, nämlich dass der Dienstanbieter einen Dienstinhalt zur Zustellung an das erste Client-Endgerät hat, und das Verfahren **dadurch gekennzeichnet ist, dass** die Dienstanzeigemitteilung (309) ein Satz empfohlener Dienstqualitätsparameter aufweist, die der Dienstanbieter empfiehlt, dass das erste Client-Endgerät sie für einen Träger eines Trägerdienstes zum Empfang des Dienstinhalts anfordere.

32. Verfahren nach Anspruch 31, wobei das Verfahren ferner umfasst: Bestimmen des Satzes empfohlener Dienstqualitätsparameter basierend auf zumindest einem der folgenden Typen von Eingabeinformation: Dienstinhaltstyp, Teilnehmerschaftstyp des Benutzers des Endgeräts, Information über das Netzwerk, in dem der Trägerdienst eingerichtet werden soll, und Anbieter des Dienstinhalts.

33. Verfahren nach Anspruch 31 oder 32, wobei der Satz empfohlener Dienstqualitätsparameter ein Satz empfohlener Paketdatenprotokoll-Kontext-Dienstqualitätsparameter ist.

34. Verfahren nach einem der Ansprüche 31 bis 33, wobei die Dienstanzeigemitteilung (309) eine WAP-Push-Dienstlademitteilung ist, die durch Anfügung des Satzes empfohlener Dienstqualitätsparameter modifiziert worden ist.

35. Verfahren nach einem der Ansprüche 31 bis 33, wobei die Dienstanzeigemitteilung eine WAP-Push-Dienstanzeigemitteilung ist, die durch Anfügung des Satzes empfohlener Dienstqualitätsparameter modifiziert worden ist.

36. Verfahren nach einem der Ansprüche 31 bis 35, wobei die Dienstanzeigemitteilung (309) an das erste Client-Endgerät (102a) über einen vorher eingerichteten primären Paketdatenprotokoll-Kontext (701) als Push-Mitteilung übertragen wird (703b) und wobei der Satz empfohlener Dienstqualitätsparameter ein Satz empfohlener Paketdatenprotokoll-Kontext-Dienstqualitätsparameter für einen sekundären Paketdatenprotokoll-Kontext ist.

37. Verfahren nach einem der Ansprüche 31 bis 36, wobei die Information, dass der Dienstanbieter einen Dienstinhalt zur Zustellung an das Endgerät hat, einen Uniform Resource Identifier, URI, umfasst, der den Dienstinhalt anzeigt.

38. Verfahren nach einem der Ansprüche 31 bis 37, wobei der Satz empfohlener Dienstqualitätsparameter einen Hinweis auf eine vorher definierte UMTS-QoS-Klasse umfasst.

39. Verfahren nach einem der Ansprüche 31 bis 38, wobei der Satz empfohlener Dienstqualitätsparameter einen empfohlenen Wert für zumindest ein UMTS-QoS-Attribut umfasst.

40. Verfahren nach einem der Ansprüche 31 bis 39, wobei das Verfahren ferner aufweist: Prüfen, ob es dem Dienstanbieter erlaubt ist, die Dienstanzeigemitteilung (309) an das erste Client-Endgerät (102a) durch Prüfung von vorher bestimmten Grundsätzen als Push-Mitteilung zu übertragen.

## Revendications

1. Terminal de communication mobile (102a) comprenant une application (310) pour recevoir au moins un service de données en paquets en provenance d'un fournisseur de services (106a), laquelle application (310) est agencée de manière à recevoir un message d'indication de service en mode push (309) en provenance du fournisseur de services, lequel message d'indication de service inclut des informations indiquant que le fournisseur de services présente un contenu de service à remettre au terminal, et laquelle application est en outre agencée de manière à initier la configuration d'un service de porteuse destiné à la réception dudit contenu de service, **caractérisé en ce que** ledit terminal comporte en outre un moyen de traitement (311) destiné à :
récupérer un ensemble de paramètres de qualité de service recommandés qui est inclus dans le message d'indication de service reçu (309), lequel ensemble de paramètres de qualité de service recommandés est un ensemble de paramètres de qualité de service au sein d'une porteuse que le fournisseur de services recommande au terminal de demander concernant une porteuse du service de porteuse destiné à la réception du contenu de service ;
traiter l'ensemble de paramètres de qualité de service recommandés pour déterminer un ensemble de paramètres de qualité de service traités sur la base dudit ensemble de paramètres de qualité de service recommandés ; et
demander l'ensemble de paramètres de qualité de service traités concernant la porteuse du service de porteuse destiné à la réception dudit contenu de service.

2. Terminal de communication mobile (102a) selon la revendication 1, dans lequel ledit ensemble de paramètres de qualité de service traités est identique audit ensemble de paramètres de qualité de service recommandés.

3. Terminal de communication mobile (102a) selon la revendication 1 ou 2, dans lequel ledit service de porteuse est un contexte de protocole de données en paquets.

4. Terminal de communication mobile (102a) selon l'une quelconque des revendications précédentes, dans lequel ledit message d'indication de service en mode push (309) est un message de chargement de service WAP en mode push qui a été modifié en annexant l'ensemble de paramètres de qualité de service recommandés.

5. Terminal de communication mobile (102a) selon l'une quelconque des revendications 1 à 3, dans lequel ledit message d'indication de service en mode push est un message d'indication de service WAP en mode push qui a été modifié en annexant l'ensemble de paramètres de qualité de service recommandés.

6. Terminal de communication mobile (102a) selon l'une quelconque des revendications 1 à 3, dans lequel ledit terminal est agencé de manière à recevoir ledit message d'indication de service en mode push sur un contexte de protocole de données en paquets principal préétabli (701) et dans lequel ledit service de porteuse destiné à la réception dudit contenu de service est un contexte de protocole de données en paquets auxiliaire.

7. Terminal de communication mobile (102a) selon l'une quelconque des revendications précédentes, dans lequel les informations indiquant que le fournisseur de services présente un contenu de service à remettre au terminal incluent un identifiant de ressources universelles, URI, lequel indique le contenu de service.

8. Terminal de communication mobile (102a) selon l'une quelconque des revendications précédentes, dans lequel ledit ensemble de paramètres de qualité de service recommandés comporte une indication d'une classe de qualité QoS de système UMTS prédéfinie.

9. Terminal de communication mobile (102a) selon l'une quelconque des revendications précédentes, dans lequel ledit ensemble de paramètres de qualité de service recommandés comporte une valeur recommandée pour au moins un attribut de qualité QoS de système UMTS.

10. Procédé dans un terminal de communication mobile (102a) comprenant une application (310) pour recevoir au moins un service de données en paquets en provenance d'un fournisseur de services (106a), le procédé comportant les étapes ci-dessous dans lesquelles :
l'application reçoit (301) un message d'indication de service en mode push (309) en provenance du fournisseur de services, lequel message d'indication de service inclut des informations indiquant que le fournisseur de services présente un contenu de service à remettre au terminal, **caractérisé en outre par** les étapes ci-après consistant à :
récupérer (303) un ensemble de paramètres de qualité de service recommandés qui est inclus dans le message d'indication de service reçu (309), lequel ensemble de paramètres de qualité de service recommandés est un ensemble de paramètres de qualité de service au sein d'une porteuse que le fournisseur de services recommande au terminal de demander concernant une porteuse du service de porteuse destiné à la réception du contenu de service ;
traiter (303) l'ensemble de paramètres de qualité de service recommandés pour déterminer un ensemble de paramètres de qualité de service traités sur la base dudit ensemble de paramètres de qualité de service recommandés ; et
l'application initiant (304) la configuration d'un service de porteuse destiné à la réception dudit contenu de service demandant l'ensemble de paramètres de qualité de service traités concernant la porteuse du service de porteuse.

11. Procédé selon la revendication 10, dans lequel ledit ensemble de paramètres de qualité de service traités est identique audit ensemble de paramètres de qualité de service recommandés.

12. Procédé selon la revendication 10 ou 11, dans lequel ledit service de porteuse est un contexte de protocole de données en paquets.

13. Procédé selon l'une quelconque des revendications 10 à 12, dans lequel ledit message d'indication de service en mode push (309) est un message de chargement de service WAP en mode push qui a été modifié en annexant l'ensemble de paramètres de qualité de service recommandés.

14. Procédé selon l'une quelconque des revendications 10 à 12, dans lequel ledit message d'indication de service en mode push est un message d'indication de service WAP en mode push qui a été modifié en annexant l'ensemble de paramètres de qualité de service recommandés.

15. Procédé selon l'une quelconque des revendications 10 à 12, dans lequel ledit message d'indication de service en mode push (309) est reçu sur un contexte de protocole de données en paquets principal préétabli (701) et dans lequel ledit service de porteuse destiné à la réception dudit contenu de service est un contexte de protocole de données en paquets auxiliaire.

16. Procédé selon l'une quelconque des revendications 10 à 15, dans lequel les informations indiquant que le fournisseur de services présente un contenu de service à remettre au terminal incluent un identifiant de ressources universelles, URI, lequel indique le contenu de service.

17. Procédé selon l'une quelconque des revendications 10 à 16, dans lequel ledit ensemble de paramètres de qualité de service recommandés comporte une indication d'une classe de qualité QoS de système UMTS prédéfinie.

18. Procédé selon l'une quelconque des revendications 10 à 17, dans lequel ledit ensemble de paramètres de qualité de service recommandés comporte une valeur recommandée pour au moins un attribut de qualité QoS de système UMTS.

19. Noeud de réseau (106a) dans un réseau pour délivrer un ensemble de services de données en paquets en provenance d'un fournisseur de services à des terminaux clients mobiles, le noeud de réseau comportant :
un moyen de création de messages (312) pour créer un message d'indication de service (309) en vue d'une transmission en mode push à un premier terminal client (102a) ; et
une interface (313) pour une transmission en mode push du message d'indication de service (309) au premier terminal client (102a), dans lequel le moyen de création de messages (312) est agencé de manière à inclure, dans le message d'indication de service (309), des informations indiquant que le fournisseur de services présente un contenu de service à remettre au premier terminal client et **caractérisé en ce que** le moyen de création de messages (312) est agencé de manière à inclure, dans le message d'indication de service (309), un ensemble de paramètres de qualité de service recommandés, que le fournisseur de services recommande au premier terminal client de demander concernant une porteuse d'un service de porteuse destiné à la réception du contenu de service.

20. Noeud de réseau (106a) selon la revendication 19, dans lequel ledit noeud de réseau comporte en outre un moyen de détermination de paramètres (314) pour déterminer ledit ensemble de paramètres de qualité de service recommandés sur la base d'au moins des types suivants d'informations d'entrée : le type du contenu de service, le type d'abonnement de l'utilisateur du terminal, des informations sur le réseau dans lequel le service de porteuse doit être établi, et le fournisseur du contenu de service.

21. Noeud de réseau (106a) selon la revendication 19 ou 20, dans lequel ledit ensemble de paramètres de qualité de service recommandés est un ensemble de paramètres de qualité de service de contexte de protocole de données en paquets recommandés.

22. Noeud de réseau (106a) selon l'une quelconque des revendications 19 à 21, dans lequel ledit message d'indication de service (309) est un message de chargement de service WAP en mode push qui a été modifié en annexant l'ensemble de paramètres de qualité de service recommandés.

23. Noeud de réseau (106a) selon l'une quelconque des revendications 19 à 21, dans lequel ledit message d'indication de service est un message d'indication de service WAP en mode push qui a été modifié en annexant l'ensemble de paramètres de qualité de service recommandés.

24. Noeud de réseau (106a) selon l'une quelconque des revendications 19 à 23, dans lequel ledit noeud de réseau est agencé pour une transmission en mode push dudit message d'indication de service au premier terminal client (102a) sur un contexte de protocole de données en paquets principal préétabli (701) et dans lequel ledit ensemble de paramètres de qualité de service recommandés est un ensemble de paramètres de qualité de service de contexte de protocole de données en paquets recommandés pour un contexte de protocole de données en paquets auxiliaire.

25. Noeud de réseau (106a) selon l'une quelconque des revendications 19 à 24, dans lequel les informations indiquant que le fournisseur de services présente un contenu de service à remettre au terminal incluent un identifiant de ressources universelles, URI, lequel indique le contenu de service.

26. Noeud de réseau (106a) selon l'une quelconque des revendications 19 à 25, dans lequel ledit ensemble de paramètres de qualité de service recommandés comporte une indication d'une classe de qualité QoS de système UMTS prédéfinie.

27. Noeud de réseau (106a) selon l'une quelconque des revendications 19 à 26, dans lequel ledit ensemble de paramètres de qualité de service recommandés comporte une valeur recommandée pour au moins un attribut de qualité QoS de système UMTS.

28. Noeud de réseau (106a) selon l'une quelconque des revendications 19 à 27, dans lequel ledit noeud de réseau est un serveur d'applications (409) du fournisseur de services.

29. Noeud de réseau (106a) selon l'une quelconque des revendications 19 à 27, dans lequel ledit noeud de réseau est un serveur de règles (411), lequel est en outre agencé de manière à vérifier que le fournisseur de services est autorisé à transmettre le message d'indication de service (309) en mode push vers le premier terminal client (102a).

30. Noeud de réseau (106a) selon l'une quelconque des revendications 19 à 27, dans lequel ledit noeud de réseau est une passerelle mandataire en mode push (410) laquelle est agencée de manière à créer ledit message d'indication de service (309) sur la base d'un message de service reçu d'un serveur d'applications (409).

31. Procédé dans un noeud de réseau (106a) au sein d'un réseau pour délivrer un ensemble de services de données en paquets en provenance d'un fournisseur de services à des terminaux clients mobiles, le procédé comportant les étapes ci-après consistant à :
créer un message d'indication de service (309) pour une transmission en mode push à un premier terminal client (102a) ; et
transmettre (301) le message d'indication de service (309) en mode push vers le premier terminal client (102a), dans lequel le message d'indication de service (309) inclut des informations indiquant que le fournisseur de services présente un contenu de service à remettre au premier terminal client et le procédé est **caractérisé en ce que** le message d'indication de service (309) inclut un ensemble de paramètres de qualité de service recommandés, que le fournisseur de services recommande au premier terminal client de demander concernant une porteuse d'un service de porteuse destiné à la réception du contenu de service.

32. Procédé selon la revendication 31, dans lequel le procédé comporte en outre l'étape consistant à déterminer ledit ensemble de paramètres de qualité de service recommandés sur la base d'au moins l'un des types suivants d'informations d'entrée : le type du contenu de service, le type d'abonnement de l'utilisateur du terminal, des informations sur le réseau dans lequel le service de porteuse doit être établi, et le fournisseur du contenu de service.

33. Procédé selon la revendication 31 ou 32, dans lequel ledit ensemble de paramètres de qualité de service recommandés est un ensemble de paramètres de qualité de service de contexte de protocole de données en paquets recommandés.

34. Procédé selon l'une quelconque des revendications 31 à 33, dans lequel ledit message d'indication de service (309) est un message de chargement de service WAP en mode push qui est modifié en annexant l'ensemble de paramètres de qualité de service recommandés.

35. Procédé selon l'une quelconque des revendications 31 à 33, dans lequel ledit message d'indication de service est un message d'indication de service WAP en mode push qui est modifié en annexant l'ensemble de paramètres de qualité de service recommandés.

36. Procédé selon l'une quelconque des revendications 31 à 35, dans lequel ledit message d'indication de service (309) est transmis en mode push (703b) vers le premier terminal client (102a) sur un contexte de protocole de données en paquets principal préétabli (701) et dans lequel ledit ensemble de paramètres de qualité de service recommandés est un ensemble de paramètres de qualité de service de contexte de protocole de données en paquets recommandés pour un contexte de protocole de données en paquets auxiliaire.

37. Procédé selon l'une quelconque des revendications 31 à 36, dans lequel les informations indiquant que le fournisseur de services présente un contenu de service à remettre au terminal incluent un identifiant de ressources universelles, URI, lequel indique le contenu de service.

38. Procédé selon l'une quelconque des revendications 31 à 37, dans lequel ledit ensemble de paramètres de qualité de service recommandés comporte une indication d'une classe de qualité QoS de système UMTS prédéfinie.

39. Procédé selon l'une quelconque des revendications 31 à 38, dans lequel ledit ensemble de paramètres de qualité de service recommandés comporte une valeur recommandée pour au moins un attribut de qualité QoS de système UMTS.

40. Procédé selon l'une quelconque des revendications 31 à 39, dans lequel ledit procédé comporte en outre l'étape consistant à vérifier si le fournisseur de services est autorisé à transmettre le message d'indication de service (309) en mode push au premier terminal client (102a) en contrôlant une règle prédéterminée.
